(19) **Europäisches Patentamt**
**European Patent Office**
**Office européen des brevets**

(11) **EP 1 672 389 B1**

(12) **EUROPEAN PATENT SPECIFICATION**

(45) Date of publication and mention
of the grant of the patent:
**07.08.2013 Bulletin 2013/32**

(51) Int Cl.:
*G01S 13/93* (2006.01)    *G07C 5/08* (2006.01)
*G08B 21/06* (2006.01)

(21) Application number: **04030207.7**

(22) Date of filing: **20.12.2004**

(54) **Method for estimating a traffic situation**

Verfahren zur Schätzung einer Verkehrslage

Procédé pour l'estimation d'une situation de trafic

(84) Designated Contracting States:
**DE GB SE**

(43) Date of publication of application:
**21.06.2006 Bulletin 2006/25**

(73) Proprietor: **Volvo Car Corporation**
**405 31 Göteborg (SE)**

(72) Inventors:
• **Birk, Wolfgang**
**95435 Gammelstad (SE)**

• **Brännström, Mattias**
**41481 Göteborg (SE)**
• **Levin, Daniel**
**41481 Göteborg (SE)**

(74) Representative: **Engstrand, Maria Linnéa**
**Valea AB**
**Lindholmspiren 5**
**417 56 Göteborg (SE)**

(56) References cited:
**US-A1- 2004 030 458    US-A1- 2004 243 368**

## Description

*Field of the invention*

The present invention relates to a method for estimating a traffic situation.

*Background of the invention*

Vehicle systems are known that attempt to predict an upcoming road situation. The prediction may be used for different purposes, such as e.g. to evaluate whether a driver's current behaviour is appropriate in view of the upcoming situation.

US 6 321 159 describes a lane tracking system, having road path previewing means for detecting a current position of a vehicle with respect to a road path, and previewing a target road path lying a certain distance ahead of the vehicle. The system further comprises a steering angle sensor for detecting a current steering angle of the vehicle, and a storage unit for storing data obtained from the road path previewing means and the steering angle sensor. The system is used to control a steering actuator so as to optimise a lateral deviation of the vehicle with respect to the target road path.

US 6 292 752 describes another system for acquiring data indicative of the path of a lane. The device determines the lane curvature and/or the transverse position of an object ahead of the vehicle relative to the lane by estimation, using a presettable estimation algorithm including a dynamic vehicle motion model.

US 2002/0042668 describes a system for estimating the road shape in front of a vehicle using a video camera.

US 2004/0243368 describes a system for analysing vehicle and driver behaviour including a model-based reconstruction unit that reconstructs an accident scenario by unifying preprocessed data and estimated variables from a vehicle model and estimation unit.

US 2004/0030458 describes a method and a device for evaluating driver performance comprising continuous detection of the actual state of travel and the actual traffic situation and determining a reference state of travel pertaining to the actual traffic situation. The actual state of travel detected is evaluated by comparing it with the pertaining detected reference state of travel.

A problem with known systems is that they do not always provide a sufficiently high level of performance, but may lead to non-conclusive results.

*Summary of the invention*

In view of the above, it is an object of the present invention to provide a method for estimating a traffic situation which presents advantages over prior art methods.

This object is achieved according to the invention by a method for estimating a traffic situation in relation to a vehicle in accordance with claim 1.

the method comprises retrieving and storing data representative of the vehicle's state and retrieving and storing data representative of the environment surrounding the vehicle at a first instant,

retrieving and storing data representative of the vehicle's state and of the environment surrounding the vehicle during an estimation period following said first instant, and

using the data retrieved during the estimation period to estimate the traffic situation at the first instant.

The method according to the invention presents the advantage that information regarding the surrounding environment obtained during the estimation period is used for estimating the traffic situation at the start of the estimation period. Thus, disadvantages due to incorrect estimation of an upcoming road situation, as might occur in many prior art systems are reduced.

In this context, the term "traffic situation" is to be understood as the situation surrounding the vehicle. It could include the curvature of the road upon which the vehicle is travelling, the location and speed of surrounding traffic, the location of stationary objects etc. When estimating the traffic situation, focus may be made on various aspects of the situation. Thus it is possible to select a number of different factors that should be evaluated in the situation, and to disregard others.

With the suggested method, the estimation of the traffic situation is not made in real time, since an estimation period must elapse before the traffic situation at the beginning of the estimation period may be estimated. In several applications real time is however not necessary for obtaining a useful result. As an example, if the traffic situation is estimated for purposes of determining driver impairments such as drowsiness, the fact that the estimation of the traffic situation is not made in real time is not a problem. Driver drowsiness is a relatively slow process, on the minutes-scale, and hence a short delay in the evaluation is not crucial.

Data representative of the state of the vehicle are data giving information about the vehicle. Preferably, the vehicle's speed and yaw rate are included in the data regarding the state of the vehicle. However, other variables may also be included, such as current deceleration or acceleration of the vehicle.

The delay in the evaluation is generally related to the length of the estimation period, which would normally be selected on the seconds-scale. The estimation period may advantageously be greater than 0s, preferably greater than 0.2 s, most preferred at least 2 s. The length of the estimation period may even be selected to be at least 5 s.

The data representative of the surrounding environment may advantageously include information regarding surrounding dynamic objects, such as vehicles, and regarding surrounding static objects such as lane markings and/or road curves. Advantageously, the vehicle's position may be included in, or calculated from, the data representative of the environment of the vehicle, e. g. the vehicle's position in relation to a road or lane. Information regarding dynamic objects may in particular be used to take the surrounding traffic into account when estimating the traffic situation.

Advantageaously, the data retrieved during the estimation period may further be used to estimate the traffic scenario during the estimation period. Herein, the term "traffic scenario" is used for describing the context of the traffic situation, e.g. if the driver is performing an overtaking, is in a line of vehicles, is giving way for another vehicle, is changing lanes or is selecting a side road etc. The traffic scenario estimation may be selected so as to focus primarily on selected aspects of different traffic scenarios.

Further, additional data such as interaction data indicating when the driver is performing operations on the vehicle may be retrieved and stored for use in the estimation or evaluation.

Advantageously, the method may be used for evaluating the state of the vehicle at the first instant in view of the estimated traffic situation at the first instant. Thus, the evaluation may be used for indicating whether the state of the vehicle, e.g. its speed, direction and position, at the beginning of the estimation period was suitable for the upcoming traffic situation at that instant.

In one embodiment of the method, the behaviour of a driver of the vehicle at the first instant is evaluated in view of the estimated traffic situation at the first instant. For evaluating the behaviour of the driver at the first instant, the appropriateness of the state of the vehicle at the first instant in view of the upcoming traffic situation may advantageously be evaluated, as mentioned above. However, other data reflecting the behaviour of the driver may also be of interest, such as whether the driver was making a telephone call or performing other operations. The method may also be combined with systems where the driver is monitored with a camera for analysing e.g. the driver's eyelids.

In a particularly advantageous embodiment of the invention, the data representative of the environment of the vehicle may comprise data representative of the vehicle's lateral position in relation to a lane. The data representative of the environment during the estimation period may suitably comprise data from a lane-tracking system, advantageously including a camera. Determination of the vehicle's lateral position in relation to a lane enables evaluation of the driver's ability to plan the lateral position of the vehicle in the lane in view of the upcoming traffic situation and possibly also in view of the estimated traffic scenario. The lateral position of the vehicle has been found to be a useful variable to study for evaluating the driver's possible impairment due to e. g. drowsiness, illness, distraction or intoxication.

Suitably, a planned path, being the path which the vehicle would be expected to follow considering the state of the vehicle at the first instant, is calculated and compared at least with data being representative of the surrounding environment during said estimation period for evaluating the state of the vehicle and/or the behaviour of the driver at the first instant.

The planned path at the first instant is the path that the vehicle would follow if no corrections of the state of the vehicle e. g. its yaw rate and speed are made from the first instant. When comparing the planned path of the driver with the estimated traffic situation at the first instant, it is possible to evaluate the capability of the driver to plan ahead. Further, it is possible to adapt the evaluation by selecting the variables used for describing the state of the vehicle. If for example only the speed and yaw rate of the vehicle are used to describe the state, the planned path would be the path followed if the speed and yaw rate are held constant from the first instant and onwards. In a more complicated model, the acceleration of the vehicle could also be used, and the planned path would be calculated not using a constant speed, but assuming a constant acceleration.

The planned path may be calculated for an interval being at least a portion of the estimation period. A suitable interval may be selected considering the traffic situation at the instant, and the time horizon for which a driver would generally be able to plan ahead in this type of traffic situation. The time horizon for planning ahead depends on different factors such as e.g. the speed of the vehicle, whether the road is straight or curved, and the surrounding traffic.

The planned path may advantageously be calculated using the vehicle's position, speed and yaw rate at the first instant t1 as indata, and/or suitably using a linear bicycle model.

Estimations of the traffic situation may preferably be performed at subsequent instances having a selected frequency. This frequency would preferably be selected such that the time gap between the instances is considerably less than the estimation period. The frequency may for instance be selected in the order of magnitude of 10 Hz.

In a second aspect, the invention relates to a system for warning a driver using a method for estimation of the traffic situation according to any one of the preceding claims, and issuing or not issuing a warning based on said estimation.

Although in this application it is referred to a first instant, and to a time period, this is to be understood to be equivalent with referring to a first distance, and to a distance interval. The person skilled in the art will readily translate the description being made using time as a variable so as to involve distance measures instead.

Additional features and advantages of the invention will appear more clearly from the following detailed description of a preferred embodiment of the invention, which is given by way of non-limiting example only and with reference to the accompanying drawings.

*Brief description of the drawings*

Figs. 1a and 1b illustrate the current position and the planned path of a vehicle.

Fig. 2 is a schematic picture of the planned vehicle path, from $(x_0, y_0)$ to $(x_p, y_p)$ along a circle arc of length $S$ with radius $R$.

Fig. 3 is an overview of the variables used for the planned lateral position calculation.

Fig. 4 is a diagram illustrating absolute Planned Deviation values for a driver when alert (top) and impaired (bottom).

Fig. 5 is a flow chart illustrating an embodiment of a system using a method for estimating a traffic situation according to the invention.

*Detailed description of preferred embodiments of the invention*

The method of the invention will now be described in relation to an embodiment where it is used in combination with a method for evaluating the behaviour of a driver. It is to be understood that the method for estimating a traffic situation is not limited to this particular application, although it is especially suitable therein.

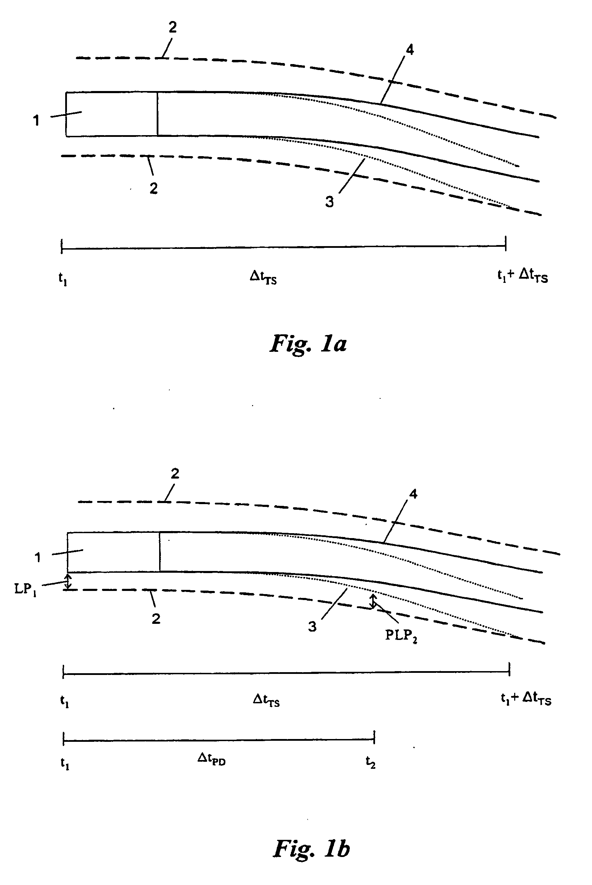

An embodiment of a method for estimating a traffic situation according to the invention will first be described in relation to Fig. 1a. A vehicle 1 is illustrated at a first instant t1 in time. In this embodiment, the vehicle 1 is positioned in a lane, having lane markings 2, at the first instant t1. Now, the method aims to estimate the traffic situation at the first instant t1, more particular, the traffic situation including e.g. stationary and dynamic objects which the vehicle 1 will reach an estimation period $\Delta t_{TS}$ forward in time from the first instant t1.

The estimation period $\Delta t_{TS}$ is > 0, meaning that the method is not a method using real-time calculations. In other words, the estimated traffic situation at the first instant t1 is determined some time after the first instant t1, and is not, as in real-time systems, determined essentially at the same first instant t1. Depending on the situation, the estimation period $\Delta t_{TS}$ may be > 0.5 s or even $\Delta t_{TS}$ > 2 s.

Data representative of the vehicle's state and of the environment surrounding the vehicle is retrieved and stored at the first instant t1.

The data representative of the vehicle's state may include data representative of the vehicle's speed, yaw rate and/or acceleration among other parameters.

The data representative of the surrounding environment at the instant t1 and during the estimation period $\Delta t_{TS}$ may include information regarding e.g. the shape of the road or lane, the surrounding traffic and/or weather conditions, depending on which characteristics of the traffic situation are selected for the estimation. In addition, the data representative of the environment may advantageously include information about the vehicle's position in relation to static objects, such as the lane, and to dynamic objects such as surrounding traffic.

After the instant t1, the vehicle 1 continues its path 4 during the estimation period $\Delta t_{TS}$. Data representative of the vehicle's state and of the surrounding environment is retrieved and stored during the drive along the path 4. Thus, the data retrieved during the estimation period $\Delta t_{TS}$ is used to estimate the traffic situation surrounding the vehicle at the first instant t1. The traffic situation may be evaluated for the entire period $\Delta t_{TS}$, or for parts thereof.

The estimated traffic situation at the first instant t1 may be used for a number of different purposes. Advantageously, the state of the vehicle at the first instant may be evaluated in view of the estimated traffic situation. Thus, it is possible to evaluate whether parameters such as the vehicle speed and yaw rate at the first instant t1 were suitable for the upcoming traffic situation or not.

Also, the estimated traffic situation may be used to evaluate the behaviour of a driver of a vehicle at the first instant. The behaviour of the driver is reflected in the state of the vehicle such as its speed and yaw rate as described above, but could alternatively or additionally include other aspects such as e.g. whether the driver was making a telephone call.

The data representative of the surrounding environment as well as of the vehicle's state may include data from different systems and sensors. Advantageously, it may include data from a lane-tracking system, preferably including a camera.

A particularly advantageous method for evaluating the state of the vehicle/behaviour of the driver may include calculation of a planned path of the vehicle from the first instant t1. The planned path is a path that the vehicle would be expected to follow from said instant t1, calculated using the data considering the state of the vehicle obtained at the first instant t1. The calculation may be made using different assumptions regarding the driver's behaviour. As an example, the planned path may be calculated using the presumption that the vehicle's speed and yaw rate are held constant from the instant t1. In another model, the acceleration of the vehicle at the first instant t1 may be taken into account, either assuming that the acceleration is held constant during the future drive, or that it forms part of some assumed driving pattern.

However, the planned path is determined using information obtained at the first instant t1, and not thereafter. In Fig. 1a, the planned path 3 is shown in a dotted line. As seen in Fig. 1a, the actual path 4 followed by the vehicle after the instant t1 need not be identical to the planned path 3, since the actual state of the vehicle after the first instant t1 may differ from the assumptions made due to measures taken by the driver along the way.

The inventors have found that, generally, drivers being impaired by e. g. drowsiness, illness, distraction or intoxication seem to plan the path of the vehicle worse than alert drivers do. In other words, an impaired driver cannot estimate the upcoming road situation and/or cannot adapt his driving to the upcoming road situation as accurately as an alert driver can.

Thus, by calculating the planned path at the instant t1 for at least a portion $\Delta t_{PD}$ of the estimation period $\Delta t_{TS}$, and comparing it to the estimated traffic situation at the instant t1, the state of the vehicle and/or the behaviour of the driver at the first instant t1 may be evaluated. It is to be understood, that the concept of calculating the planned path and comparing it to a estimated traffic situation is not restricted to use with the method for estimating a traffic situation as disclosed above. Instead, other methods for estimating traffic situations could be suitable for the application. However, the method for estimating a traffic situation as described herein is particularly suitable, since it provides a very high accuracy as compared to previously known methods.

In addition, the planned path may be used for determining a measure for evaluation of a driver, as will be explained in the following in relation to Fig. 1b. The measure for evaluation of a driver makes use of the finding that the planned path 3 of impaired drivers often varies largely in relation to the lane markings 2. For alert drivers, this is not nearly as common. This suggests that impaired drivers seem to concentrate on keeping the vehicle on the road, and are not able to plan ahead in view of a traffic situation in the same way as alert drivers do.

The method for determining a measure for evaluation of a driver compares the lateral position LP1 of a vehicle 1 in relation to a lane at a first instant t1 with a planed lateral position PLP2 to which the vehicle would arrive at a second instant t2 if the planned path calculated from t1 were followed. Thereafter, a measure called "planned deviation" is determined, being the difference between the planned lateral position PLP2 at the second instant t2 and the lateral position LP1 at the first instant.

For calculating the planned lateral position PLP2 at the second instant t2, following a planned path from the first instant t1, the road shape following the first instant t1 must be estimated. For this estimation any suitable system may be used. However, the method for estimating a traffic situation as described above has been found to be particularly advantageous and to provide accurate and useful results. In this case, the estimated traffic situation may include estimation of the upcoming road shape only, or in combination with estimation of other situation information such as the surrounding traffic situation, whether an overtaking took place etc., which could be used as additional variables for determining the ability of the driver to plan ahead.

When calculating the planned deviation measure using the method for estimation of a traffic situation as described above, the data regarding the state of the vehicle at the first instant t1 including e.g. the speed and yaw rate measured at that first instant. This data is stored. Thereafter, the vehicle travels along the road during the time period $\Delta t_{TS}$, and data representative of the vehicle state and the surrounding environment is stored. The data representative of the surrounding environment includes in particular information regarding the position of the lane markings 2 of the actual road.

Next, the planned path of the vehicle is calculated for an interval $\Delta t_{PD}$ from the first instant t1 to a second instant t2. The planned path interval $\Delta t_{PD}$ is in this case a portion of the estimation period used for the traffic situation estimation $\Delta t_{TS}$. The planned path 3 is calculated using the lateral position LP1 retrieved at the first instant t1 and e.g. the speed and yaw rate measured at the first instant t1.

Since a driver of a vehicle must adapt his driving behaviour to a traffic situation including e.g. stationary and dynamic objects which the vehicle will reach within a certain time period, the planned path interval $\Delta t_{PD}$ may advantageously be selected so as to reflect a relevant time/distance of planning ahead. Thus, if the vehicle travels at a relatively high speed, the planned path interval $\Delta t_{PD}$ may be selected differently as compared to when the vehicle is travelling with a lower speed.

The length of the planned path interval $\Delta t_{PD}$ may be set in relation to one or more of vehicle or environment variables, such as the current speed of the vehicle, the surrounding traffic situation, whether the road is straight or curved, etc. Advantageously, the planned path interval $\Delta t_{PD}$ may be updated in accordance with changes in the relevant variables.

The planned lateral position PLP2 at the second instant t2 is determined by comparing the planned path 3 with the estimated traffic situation obtained previously, including data about the road shape that have been collected during the estimation period $\Delta t_{TS}$. Accordingly, the planned lateral position PLP2 at the second instant t2 may be determined with very high accuracy.

Using the suggested method, the calculations of the planned lateral position can not be made in real time. For purposes of determining driver drowsiness, however, this is not a problem. Driver drowsiness is a slow process, on the minute-scale, and hence it is not a problem to have a delay of a few seconds in the calculations of the planned lateral position.

However, the planned lateral position may be determined in real time if real-time methods are used for the estimation of an upcoming traffic situation.

Information regarding the environment surrounding the vehicle may advantageously be gathered by a lane tracking system, preferably using a camera such as a forward looking monocamera, for determining the lateral position of the vehicle. However, also other sensors may be used to obtain information regarding the traffic situation, whether a take-over takes place etc.

Once the planned lateral position PLP2 has been determined, the planned deviation, PD, being the difference between the planned lateral position PLP2 and the lateral position LP1 at the first instant t1 may be determined. Thus, the PD values can be both positive and negative, depending on the current lateral position of the vehicle and how the driver "aims". It is in many cases, however, only the magnitude of the PD values that is interesting, which is why the absolute values of the PD values may advantageously be used for evaluation.

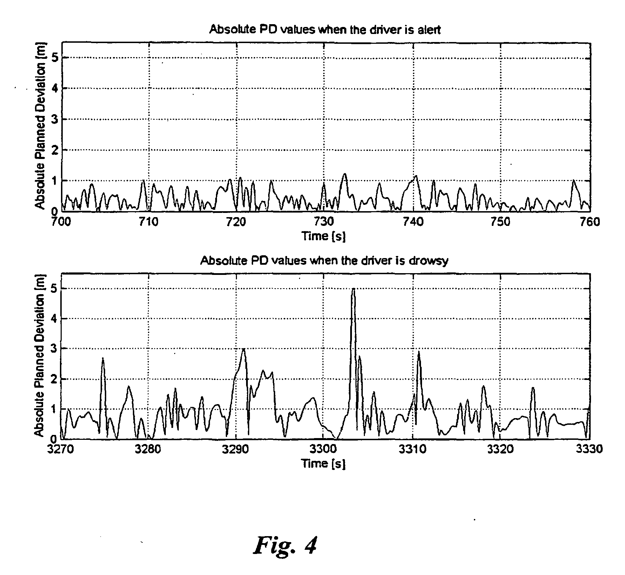

What the PD values could look like for a driver when alert and impaired, respectively, is shown in Fig 4.

For evaluating the behaviour of a driver, the planned deviation is advantageously determined at a selected frequency during a drive. The selected frequency is advantageously selected such that a new planned deviation calculation is initiated several times during the estimation period $\Delta t_{PD}$.

The planned deviation measures may be analysed for evaluation of the behaviour of a driver. In general, impaired drivers have higher planned deviation values than alert drivers. This can be explained by impaired drivers tending to plan the future vehicle path worse than alert drivers.

Advantageously, a number of planned deviation measures are then compiled, e.g. by forming a mean over the planned deviation measures, a sum thereof, obtaining a distribution thereof, a filtration or other compilation resulting in a measure representative of a number of planned deviation measures. In the following, this measure will be referred to as a Mean Planned Deviation measure (MPD), although it shall be understood from the above that this measure need not strictly be a mean of a number of planned deviations measures.

For impaired drivers, the MPD values tend to increase over time (as the driver gets more and more impaired), whereas for alert drivers the MPD values stay relatively constant. This property of the MPD signal can be used to detect impaired drivers in a very accurate way.

Since different drivers have different driving patterns, a general limit indicating that a driver is impaired when the planned deviation measures or MPD exceeds the limit might be difficult to set. Instead, a threshold may be determined by gathering planned deviation measures or MPD for the driver during a selected portion of the drive, such as the start of the drive, when the driver should generally not be impaired, or during a portion of the drive where the driver is found to drive particularly well. Thus, a threshold for the remaining part of the drive may be set in relation to the planned deviation measures/MPD during the selected portion. In addition, a warning system may be arranged for warning a driver of impairment if the planned deviation measures/MPD measures exceeds the threshold, or repeatedly exceeds the threshold during a certain time interval.

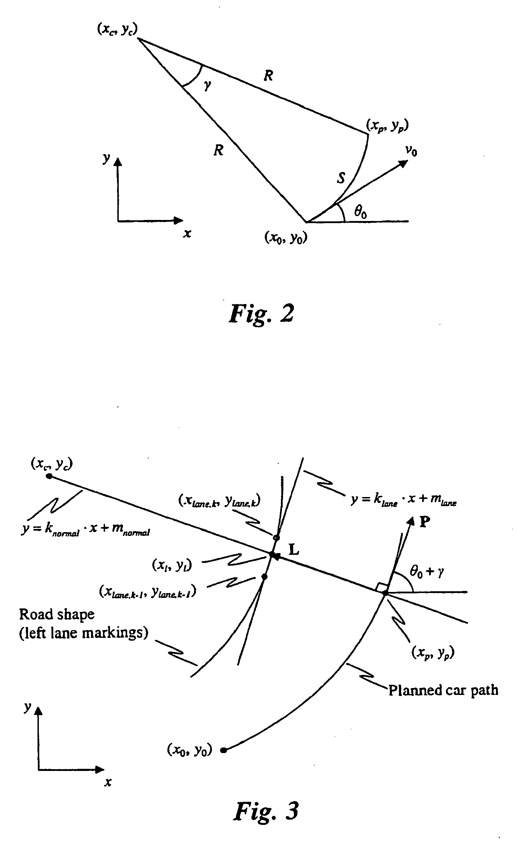

For determining the planned path of the vehicle, a linear bicycle model may be used, which will be described in the following with reference to Figs 2 and 3.

In order to determine the planned path from an instant, the yaw rate and the speed of the vehicle at that instant may be used to obtain a good approximation. The radius R of the vehicle path can be calculated as

$$R = \frac{v}{\dot{\Psi}}$$

where $v$ is the vehicle speed [m/s] and $\dot{\Psi}$ [rad/s] is the yaw rate rate of the vehicle.

In Fig. 2, the angle $\theta_0$ is the current angle of the vehicle in a global *xy*-coordinate system, $v_0$ is the current speed of the vehicle, R is the turn radius of the vehicle, S is the distance (along the circumference of a circle with radius R) between the current position of the vehicle and the position where the planned lateral position should be calculated, $\gamma$ is the vehicle turning angle, $(x_0, y_0)$ is the current position of the vehicle, $(x_p, y_p)$ is the planned position of the vehicle and, finally, $(x_c, y_c)$ is the centre of the circle that the vehicle is turning along. The angle $\theta_0$, the velocity $v_0$, the radius R and the vehicle position $(x_0, y_0)$ are known from the vehicle path calculation algorithm and the arc length *S* is predetermined, but the other variables must be calculated. First, the angle $\gamma$ and the coordinates $(x_c, y_c)$ are calculated as

$$\gamma = \frac{S}{R} \quad \text{and} \quad (x_c, y_c) = (x_0, y_0) + R \cdot (-\sin\theta_0, \cos\theta_0).$$

Then, the coordinates $(x_p, y_p)$ can be calculated as

$$(x_p, y_p) = (x_0, y_0) + 2R \cdot \sin\frac{\gamma}{2} \cdot \left[ \cos\left(\theta_0 + \frac{\gamma}{2}\right), \sin\left(\theta_0 + \frac{\gamma}{2}\right) \right].$$

Now that the planned position of the vehicle is known, the planned lateral position can be calculated. Since the lane markings next to the planned vehicle path are known from the lane tracking system, these can be used to obtain the planned lateral position. The tangent to the detected lane markings closest to the planned vehicle position (on the form $y = k_{lane} \cdot x + m_{lane}$ ) is calculated as

$$k_{lane} = \frac{y_{lane,k} - y_{lane,k-1}}{x_{lane,k} - x_{lane,k-1}}, \quad m_{lane} = y_{lane,k} - k_{lane} \cdot x_{lane,k},$$

where $x_{lane,k}$, $x_{lane,k-1}$, $y_{lane,k}$ and $y_{lane,k-1}$ are the coordinates of the two sampled points on the lane markings that are closest to $(x_p, y_p)$, this is displayed in Fig. 3.

The perpendicular direction from the vehicle to the lane markings can be calculated by using the points $(x_p, y_p)$ and $(x_c, y_c)$, to obtain an equation in the form $y = k_{normal} \cdot x + m_{normal}$. This is done in the same way as when calculating the parameters $k_{lane}$ and $m_{lane}$,

$$k_{normal} = \frac{y_c - y_p}{x_c - x_p}, \quad m_{normal} = y_p - k_{normal} \cdot x_p.$$

Using the parameters $k_{lane}$ and $m_{lane}$ together with $k_{normal}$ and $m_{normal}$, the intersection of the two lines, $(x_l, y_l)$, which is the point that should be used together with $(x_p, y_p)$ to calculate the planned lateral position, can be calculated.

$$x_l = \frac{m_{lane} - m_{normal}}{k_{normal} - k_{lane}}, \quad y_l = k_{lane} \cdot x_l + m_{lane}$$

Now, the planned lateral position can finally be calculated. The distance d to the lane markings is calculated as the distance between the points $(x_l, y_l)$ and $(x_p, y_p)$.

$$d = \sqrt{(x_l - x_p)^2 + (y_l - y_p)^2}$$

Finally, it only remains to determine the sign of the lateral position, i. e. what side of the vehicle (in the global $xy$-coordinate system) the point $(x_l, y_l)$ is. This is needed, because the planned vehicle path might be so different from the road shape that the point $(x_p, y_p)$ is placed outside the lane markings.

To determine the sign of the lateral position, the two vectors P (which points in the direction of the planned vehicle path in the point $(x_p, y_p)$) and **L** (which points from point $(x_p, y_p)$ to point $(x_l, y_l)$) are calculated. By calculating the vector product, **L**×**P**, between these two vectors and studying the sign of this product, it is possible to determine what side of the vehicle that the point $(x_l, y_l)$ is. In order to perform the calculation of the vector product, a third dimension must be added to the vectors, i.e. a zero is added as a third element in the vectors L and P. If the sign is positive, that means that the lane markings are located to the right of the vehicle and a negative sign means that the lane markings are located to the left.

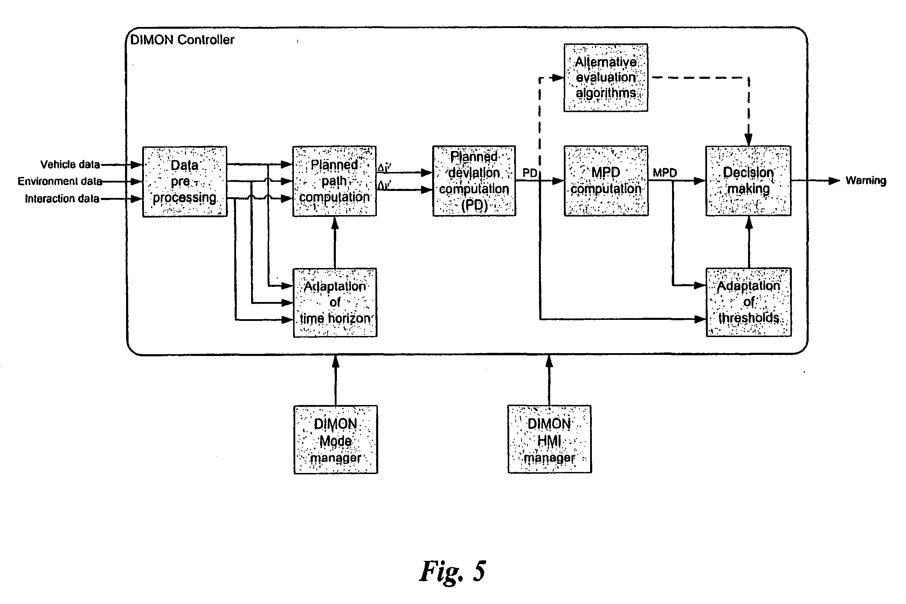

Fig. 5 is a flow schedule, illustrating an embodiment of a method for estimating a traffic situation when used in an embodiment of a method for determining a measure for the behaviour of a driver as described above. The traffic situation estimation is performed in the first block of the schedule, named "preprocessing":

In Fig. 5, the process illustrated within the square is referred to as the DIMON Controller, a Driver Impairment MONitor Controller. The DIMON Controller may be influenced by the action of other processes, such as the exemplified DIMON Mode manager and DIMON HMI manager. The DIMON Mode manager may control the mode of the DIMON e.g. whether the DIMON Controller is in active state or not or whether a re-initialisation of parameters should be made, in view of information regarding other processes and states of the vehicle. The DIMON HMI manager may control whether it is suitable to display a possible warning from the DIMON Controller to or not to the driver, depending e.g. of other warnings or information that the driver needs to pay attention to in a particular situation.

The DIMON Controller receives indata representative of the vehicle's state and of the surrounding environment. In the embodiment described, the DIMON Controller also receives interaction data regarding the interaction between the driver and the vehicle. Other data regarding the driver such as e.g. whether he receives a telephone call may also be received by the DIMON Controller. In the data preprocessing stage, the data is gathered and processed for performing the estimation of a traffic situation. In this case, indata is retrieved during estimation periods $\Delta t_{TS}$ after subsequent instants t1 in order to estimate the traffic situations at the first instants t1. The instants t1 may be selected with a constant time delay being substantially shorter than the estimation period $\Delta t_{TS}$. A suitable frequency could be about 10 Hz. The indata is preprocessed so as to be suitable for the following calculations to be performed. In the DIMON Controller illustrated in Fig. 5, the planned path is calculated for intervals $\Delta t_{PD}$ being at least portions of the estimation periods $\Delta t_{TS}$.

The data from the data preprocessing stage may advantageously be used for adapting the time horizon, i.e. adapting $\Delta t_{PD}$ for the planned path calculations. As explained previously, the relevant $\Delta t_{PD}$ depends on the present traffic situation and could suitably be selected so as to reflect the time horizon in which an alert driver is normally capable to plan ahead.

In the illustrated embodiment, the planned path is used in an embodiment of a method for determining a planned deviation measure for evaluation of the driver. In this case, the lateral position of the vehicle in relation to a lane and the state of the vehicle at the first instant is suitably reflected in the processed data coming from the data preprocessing stage. Thus, in the planned deviation computation stage, the planned deviation, being the difference between the planned lateral position at the end of the planned path calculation interval $\Delta t_{PD}$ and the lateral position at the first instant t1, is calculated, giving the planned deviation PD.

The resulting PD measures are in this embodiment evaluated by the forming of a Mean Planned Deviation value, using a number of PD measures. For estimating impairments such as drowsiness, the PD measures obtained during about a minute's time could be used to form the Mean Planned Deviation measure for evaluation. The Mean Planned Deviation value may advantageously be continuously updated.

In addition to, or as an alternative to, the MPD computation, the PD value may be used in other alternative evaluation algorithms, e.g. filters, distributions etc, as indicated in a dashed line in Fig. 5.

The MPD values may also be used for updating a threshold for whether a warning to the driver should be issued or not. As an example, the threshold adaptation may be made so as to always set the threshold in relation to the smallest MPD values obtained during a certain time period of a drive, i. e. a period during which the driver was planning his path well.

In a final step, the MPD value and/or other evaluation algorithm values are compared to the threshold in order to make a decision whether to issue a warning to the driver or not. The warning could preferably be a warning suitable for attracting the attention of an impaired driver, such as an audible warning. Even though the warning could advantageously function so as to temporary wake up a impaired driver, the purpose of the warning is to indicate to the driver that he should stop driving as soon as possible and take a rest.

Although the described embodiment is of the preferred type where the lateral position of the vehicle at the first instant is compared to the planned lateral position, it is to be understood that the method of the invention may be used also in combination with other types of measures for determining the impairment of a driver, or with other methods where it is desired to estimate an upcoming traffic situation. Also, the variables used to determine the state of the vehicle and the planned path may be varied, and could include e.g. acceleration or deceleration. The sensors used in the method could be any type of sensors giving information regarding the vehicle or the surrounding environment, including GPS systems or the like. A system using the method according to the invention may optionally be integrated or used in combination with other systems such as an Adaptive Cruise Control system, a Lane Departure Warning system or a Lane Keeping Assist system. The person skilled in the art may readily imagine other alternative embodiments without departing from the invention.

**Claims**

1. Method for evaluation of the appropriateness of the state of a vehicle at a given first instant (t1) during a drive, including estimating the upcoming traffic situation In relation to the vehicle at the first instant (t1), the method comprising
   initially retrieving and storing data representative of the vehicle's state and retrieving and storing data representative of the environment surrounding the vehicle at said first instant (t1), and
   subsequently, during an estimation period ($\Delta t_{TS}$) being > 0.5 s and following said first instant (t1),
   retrieving and storing data representative of the vehicle's state and retrieving and storing data representative of the environment surrounding the vehicle from systems and/or sensors during the estimation period ($\Delta t_{TS}$),
   wherein said data representative of the environment surrounding the vehicle comprises information regarding surrounding dynamic objects and/or surrounding stationary objects,
   and
   after said estimation period ($\Delta t_{TS}$) has elapsed,

   - using the data retrieved during the estimation period ($\Delta t_{TS}$) following said first instant (t1) to estimate the upcoming traffic situation at said first instant (t1), and
   - evaluating the appropriateness of the state of the vehicle at the first instant (t1) In view of the estimated upcoming traffic situation at the first instant (t1) during said drive.

2. Method according to claim 1, wherein the behaviour of a driver of the vehicle at the first instant (t1) is evaluated in view of the estimated upcoming traffic situation at the first instant (t1).

3. Method according to claim 1 or 2, wherein the data retrieved during the estimation period is used to estimate the traffic scenario at the first instant, and/or during the estimation period $\Delta t_{TS}$.

4. Method according to any one of the preceding claims, wherein the data representative of the environment comprises data representative of the vehicle's position In relation to the environment.

5. Method according to claim 4, wherein the data representative of the position of the vehicle comprises data representative of the vehicle's lateral position In relation to a lane.

6. Method according to claim 4 or 5, wherein the data representative of the surrounding environment during the estimation period ($\Delta t_{TS}$) includes data from a lane-tracking system.

7. Method according to claim 6, wherein said lane-tracking system includes a camera.

8. Method according to any one of the preceding claims, wherein the data representative of the state of the vehicle comprises data representative of the vehicle's speed and yaw rate.

9. Method according to any one of the previous claim, wherein said data representative of the surrounding environment includes information regarding surrounding dynamic objects, including the surrounding traffic.

10. Method according to any one of the claims 2-9, wherein the behaviour of a driver of the vehicle at the first Instant (t1) and/or during the estimation period ($\Delta t_{TS}$) is evaluated in view of the estimated traffic scenario during the estimation period ($\Delta t_{TS}$).

11. Method according to any one of the previous claims, wherein the estimation period ($\Delta t_{TS}$) is > 2s.

12. Method according to any one of the preceding claims, wherein a planned path (3) is calculated for an interval ($\Delta t_{TS}$) being at least a portion of said estimation period ($\Delta t_{TS}$), being the path which the vehicle would follow during said portion of the estimation period ($\Delta t_{TS}$) considering the state of the vehicle at the first instant (t1), the planned path (3) being compared with the estimated upcoming traffic situation at the first instant (t1) for evaluating the state of the vehicle and/or the behaviour of the driver at the first instant (t1).

13. Method according to claim 12, wherein said planned path (3) is calculated using at least the vehicle's position, speed and yaw rate at the first instant (t1) as indata.

**14.** Method according to claim 12 or 13, wherein the planned path (3) is calculated using a linear bicycle model.

**15.** Method according to any one of the claims 12 to 14, wherein the data representative of the environment surrounding the vehicle, which data is used for estimating the traffic situation, includes data regarding the vehicle's position In relation to a lane at said first instant (t1), and the method includes determining the planned lateral position of the vehicle in relation to a lane after the interval ($\Delta t_{PD}$) being at least a portion of the estimation period ($\Delta t_{TS}$), if the planned path (3) were followed, and determining a planned deviation being the difference between the planned lateral position at the end of said portion of the estimation period ($\Delta t_{TS}$) and the lateral position at the first instant (t1).

**16.** Method according to any one of the preceding claims, comprising performing estimations of the traffic situation at subsequent first instances at a frequency being selected such that the time gap between subsequent first instances is less than the estimation period ($\Delta t_{TS}$).

**17.** Method according to any one of the preceding claims, also comprising using said evaluation In order to make a decision whether to issue a warning to the driver or not.

**18.** System for warning a driver using a method according to any one of the preceding claims, and issuing or not issuing a warning based on said estimation.

**19.** Device for estimating a traffic situation In relation to a vehicle, comprising means for performing the method according to any one of the claims 1 to 17.

**Patentansprüche**

**1.** Verfahren zum Auswerten der Eignung des Zustands eines Fahrzeugs zu einem gegebenen ersten Zeitpunkt ($t_1$) während einer Fahrt, das ein Schätzen der kommenden Verkehrssituation in Bezug auf das Fahrzeug zu dem ersten Zeitpunkt ($t_1$) enthält, wobei das Verfahren umfasst:

anfängliches Abrufen und Speichern von Daten, die für den Zustand des Fahrzeugs repräsentativ sind, und Abrufen und Speichern von Daten, die für die Umgebung, die das Fahrzeug umgibt, repräsentativ sind, zu dem ersten Zeitpunkt ($t_1$) und
nachfolgend während einer Schätzperiode ($\Delta t_{TS}$), die > 0,5 s ist und dem ersten Zeitpunkt ($t_1$) folgt, Abrufen und Speichern von Daten, die für den Zustand des Fahrzeugs repräsentativ sind, und Abrufen und Speichern von Daten, die für die Umgebung, die das Fahrzeug umgibt, repräsentativ sind, von Systemen und/oder Sensoren während der Schätzperiode ($\Delta t_{TS}$),
wobei die Daten, die für die Umgebung, die das Fahrzeug umgibt, repräsentativ sind, Informationen umfassen, die umgebende dynamische Objekte und/oder umgebende stationäre Objekte betreffen, und
nachdem die Schätzperiode ($\Delta t_{TS}$) abgelaufen ist,

- Verwenden der abgerufenen Daten, die während der Schätzperiode ($\Delta t_{TS}$), die auf den ersten Zeitpunkt ($t_1$) folgt, um die kommende Verkehrssituation zu dem ersten Zeitpunkt ($t_1$) zu schätzen, und
- Auswerten der Eignung des Zustands des Fahrzeugs zu dem ersten Zeitpunkt ($t_1$) im Hinblick auf die geschätzte kommende Verkehrssituation zu dem ersten Zeitpunkt ($t_1$) während der Fahrt.

**2.** Verfahren nach Anspruch 1, wobei das Verhalten eines Fahrers des Fahrzeugs zu dem ersten Zeitpunkt ($t_1$) im Hinblick auf die geschätzte kommende Verkehrssituation zu dem ersten Zeitpunkt ($t_1$) ausgewertet wird.

**3.** Verfahren nach Anspruch 1 oder 2, wobei die während der Schätzperiode abgerufen Daten verwendet werden, um das Verkehrsszenario zu dem ersten Zeitpunkt und/oder während der Schätzperiode ($\Delta t_{TS}$) zu schätzen.

**4.** Verfahren nach einem der vorhergehenden Ansprüche, wobei die Daten, die für die Umgebung repräsentativ sind, Daten, die für die Position des Fahrzeugs in Bezug auf die Umgebung repräsentativ sind, umfassen.

**5.** Verfahren nach Anspruch 4, wobei die Daten, die für die Position des Fahrzeugs repräsentativ sind, Daten, die für die seitliche Position des Fahrzeugs in Bezug auf eine Fahrspur repräsentativ sind, umfassen.

**6.** Verfahren nach Anspruch 4 oder 5, wobei die Daten, die für die umgebende Umgebung während der Schätzperiode ($\Delta t_{TS}$) repräsentativ sind, Daten aus einem Spurverfolgungssystem enthalten.

**7.** Verfahren nach Anspruch 6, wobei das Spurverfolgungssystem eine Kamera enthalt.

**8.** Verfahren nach einem der vorhergehenden Ansprüche, wobei die Daten, die für den Zustand des Fahrzeugs repräsentativ sind, Daten, die für die Geschwindigkeit und die Giergeschwindigkeit des Fahrzeugs repräsentativ sind, umfassen.

**9.** Verfahren nach einem der vorhergehenden Ansprüche, wobei die Daten, die für die umgebende Umgebung repräsentativ sind, Informationen enthalten, die umgebende dynamische Objekte, die den umgebenden Verkehr enthalten, betreffen.

**10.** Verfahren nach einem der Ansprüche 2-9, wobei das Verhalten eines Fahrers des Fahrzeugs zu dem ersten Zeitpunkt ($t_1$) und/oder während der Schätzperiode ($\Delta t_{TS}$) im Hinblick auf das geschätzte Verkehrsszenario während der Schätzperiode ($\Delta t_{TS}$) ausgewertet wird.

**11.** Verfahren nach einem der vorhergehenden Ansprüche, wobei die Schätzperiode ($\Delta t_{TS}$) > 2s ist,

**12.** Verfahren nach einem der vorhergehenden Ansprüche, wobei ein geplanter Weg (3) für ein Intervall ($\Delta t_{TS}$), das wenigstens ein Abschnitt der Schätzperiode ($\Delta t_{TS}$) ist, berechnet wird, wobei das der Weg ist, dem das Fahrzeug während des Abschnitts der Schätzperiode ($\Delta t_{TS}$) unter Berücksichtigung des Zustands des Fahrzeugs zu dem ersten Zeitpunkt ($t_1$) folgen würde, wobei der geplante Weg (3) mit der geschätzten kommenden Verkehrssituation zu dem ersten Zeitpunkt ($t_1$) zum Auswerten des Zustands des Fahrzeugs und/oder des Verhaltens des Fahrers zu dem ersten Zeitpunkt ($t_1$) verglichen wird.

**13.** Verfahren nach Anspruch 12, wobei der geplante Weg (3) unter Verwendung wenigstens der Position, der Geschwindigkeit und der Giergeschwindigkeit des Fahrzeugs zu dem ersten Zeitpunkt ($t_1$) als Eingangsdaten berechnet wird.

**14.** Verfahren nach Anspruch 12 oder 13, wobei der geplante Weg (3) unter Verwendung eines linearen Fahrradmodells berechnet wird.

**15.** Verfahren nach einem der Ansprüche 12 bis 14, wobei die Daten, die für die Umgebung, die das Fahrzeug umgibt, repräsentativ sind, welche die Daten sind, die zum Schätzen der Verkehrssituation verwendet werden, Daten enthalten, welche die Position des Fahrzeugs in Bezug auf eine Fahrspur zu dem ersten Zeitpunkt ($t_1$) betreffen, und das Verfahren das Bestimmen der geplanten seitlichen Position des Fahrzeugs in Bezug auf eine Fahrspur nach dem Intervall ($\Delta t_{PD}$), das wenigstens ein Abschnitt der Schätzperiode ($\Delta t_{TS}$) ist, wenn dem geplanten Weg (3) gefolgt würde, und das Bestimmen einer geplanten Abweichung, welche die Differenz zwischen der geplanten seitlichen Position am Ende des Abschnitts der Schätzperiode ($\Delta t_{TS}$) und der seitlichen Position zu dem ersten Zeitpunkt ($t_1$) ist, enthält.

**16.** Verfahren nach einem der vorhergehenden Ansprüche, umfassend das Ausführen von Schätzungen der Verkehrssituation zu nachfolgenden ersten Zeitpunkten mit einer Frequenz, die so gewählt ist, dass die Zeitspanne zwischen nachfolgenden ersten Zeitpunkten kleiner ist als die Schätzperiode ($\Delta t_{TS}$).

**17.** Verfahren nach einem der vorhergehenden Ansprüche, außerdem umfassend das Verwenden der Schätzung, um eine Entscheidung zu treffen, ob eine Warnung für den Fahrer ausgegeben wird oder nicht.

**18.** System zum Warnen eines Fahrers unter Verwendung eines Verfahrens nach einem der vorhergehenden Ansprüche und Ausgeben oder nicht Ausgeben einer Warnung basierend auf besagter Schätzung.

**19.** Vorrichtung zum Schätzen einer Verkehrssituation in Bezug auf ein Fahrzeug, umfassend die Mittel zum Ausführen des Verfahrens nach einem der Ansprüche 1 bis 17.

**Revendications**

1. Procédé pour l'évaluation de l'adaptation de l'état d'un véhicule à un premier instant (t1) donné pendant sa conduite, notamment le trafic imminent en relation avec le véhicule au premier instant (t1), le procédé comprenant :

   tout d'abord la récupération et l'enregistrement de données représentatives de l'état du véhicule et la récupération et l'enregistrement de données représentatives de l'environnement autour du véhicule audit premier instant (t1), et
   ensuite, pendant une période d'estimation ($\Delta t_{TS}$) qui est > 0,5s et qui suit ledit premier instant (t1),
   la récupération et l'enregistrement de données représentatives de l'état du véhicule et la récupération et l'enregistrement de données représentatives de l'environnement autour du véhicule en provenance de systèmes et/ou de capteurs pendant ladite période d'estimation ($\Delta t_{TS}$),
   dans lequel lesdites données représentatives de l'environnement autour du véhicule comprennent des informations concernant des objets dynamiques environnants et/ou des objets fixes environnants,
   et
   une fois ladite période d'estimation ($\Delta t_{TS}$) écoulée,

   - l'utilisation des données récupérées pendant la période d'estimation ($\Delta t_{TS}$) qui suit ledit premier instant (t1) pour estimer la situation du trafic imminent audit premier instant (t1), et
   - l'évaluation de l'adaptation de l'état du véhicule au premier instant (t1) eu égard à la situation estimée du trafic imminent au premier instant (t1) pendant ladite conduite.

2. Procédé selon la revendication 1, dans lequel le comportement d'un conducteur du véhicule au premier instant (t1) est évalué eu égard à la situation estimée du trafic imminent au premier instant (t1).

3. Procédé selon la revendication 1 ou 2, dans lequel les données récupérées pendant la période d'estimation sont utilisées pour estimer le scénario du trafic au premier instant et/ou pendant la période d'estimation ($\Delta t_{TS}$).

4. Procédé selon l'une quelconque des revendications précédentes, dans lequel les données représentatives de l'environnement comprennent les données représentatives de la position du véhicule en relation avec l'environnement.

5. Procédé selon la revendication 4, dans lequel les données représentatives de la position du véhicule comprennent les données représentatives de la position latérale du véhicule en relation avec une voie de circulation.

6. Procédé selon la revendication 4 ou 5, dans lequel les données représentatives de l'environnement pendant la période d'estimation ($\Delta t_{TS}$) englobent des données provenant d'un système de suivi de trajectoire.

7. Procédé selon la revendication 6, dans lequel ledit système de suivi de trajectoire comprend une caméra.

8. Procédé selon l'une quelconque des revendications précédentes, dans lequel les données représentatives de l'état du véhicule comprennent des données représentatives de la vitesse et de la vitesse angulaire en lacet du véhicule.

9. Procédé selon l'une quelconque des revendications précédentes, dans lequel lesdites données représentatives de l'environnement comprennent des informations concernant des objets dynamiques environnants, notamment le trafic environnant.

10. Procédé selon l'une quelconque des revendications 2 à 9, dans lequel le comportement d'un conducteur du véhicule au premier instant (t1) et/ou pendant la période d'estimation ($\Delta t_{TS}$) est évalué eu égard au scénario du trafic estimé pendant la période d'estimation ($\Delta t_{TS}$).

11. Procédé selon l'une quelconque des revendications précédentes, dans lequel la période d'estimation ($\Delta t_{TS}$) est > 2s.

12. Procédé selon l'une quelconque des revendications précédentes, dans lequel une trajectoire projetée (3) est calculée pour un intervalle ($\Delta t_{PD}$) qui représente au moins une partie de ladite période d'estimation ($\Delta t_{TS}$), trajectoire qui est la trajectoire que le véhicule suivrait pendant ladite partie de la période d'estimation ($\Delta t_{TS}$) en prenant en compte l'état du véhicule au premier instant (t1), le trajet planifié (3) étant comparé à la situation estimée du trafic imminent au premier instant (t1) pour évaluer l'état du véhicule et/ou le comportement du conducteur au premier instant (t1).

**13.** Procédé selon la revendication 12, dans lequel ladite trajectoire projetée (3) est calculée en utilisant au moins la position, la vitesse et la vitesse angulaire en lacet du véhicule au premier instant (t1) comme données d'entrée.

**14.** Procédé selon la revendication 12 ou 13, dans lequel ladite trajectoire projetée (3) est calculée en utilisant un modèle bicyclette linéaire.

**15.** Procédé selon l'une quelconque des revendications 12 à 14, dans lequel les données représentatives de l'environnement autour du véhicule, ces données étant utilisées pour estimer la situation du trafic, englobent des données concernant la position du véhicule en relation avec une voie audit premier instant (t1), et le procédé comprend la détermination de la position latérale projetée du véhicule en relation avec une voie après l'intervalle ($\Delta t_{PD}$) représentant au moins une partie de ladite période d'estimation ($\Delta t_{TS}$), si la voie projetée (3) était suivie, et la détermination d'une déviation projetée qui est la différence entre la position latérale projetée à la fin de ladite période d'estimation ($\Delta t_{TS}$) et la position latérale au premier instant (t1).

**16.** Procédé selon l'une quelconque des revendications précédentes, comprenant le calcul d'estimations de l'état du trafic lors de premiers cas ultérieurs selon une fréquence choisie de telle façon que le laps de temps entre des premiers cas ultérieurs soit inférieur à la période d'estimation ($\Delta t_{TS}$).

**17.** Procédé selon l'une quelconque des revendications précédentes, comprenant aussi l'utilisation de ladite évaluation de manière à prendre la décision ou non d'envoyer une alerte au conducteur.

**18.** Système pour alerter un conducteur utilisant un procédé selon l'une quelconque des revendications précédentes, et envoyer ou ne pas envoyer une alerte sur la base de ladite estimation.

**19.** Dispositif pour estimer une situation de trafic en relation avec un véhicule, comprenant des moyens pour mettre en oeuvre le procédé selon l'une quelconque des revendications 1 à 17.

**Fig. 1a**

**Fig. 1b**

**Fig. 2**

**Fig. 3**

*Fig. 4*

*Fig. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6321159 B
- US 6292752 B
- US 20020042668 A
- US 20040243368 A
- US 20040030458 A